# EUROPEAN PATENT APPLICATION

(11) **EP 3 238 917 A1**
(43) Date of publication of application: **01.11.2017**
(21) Application number: 17168604.1
(22) Date of filing: 28.04.2017
(51) Int. Cl.: B29C 65/00, B65B 59/04, B29C 31/00, B29C 33/30, B65B 9/04, B65B 47/00, B65B 51/14, B65B 7/28

(54) **CLAMPING DEVICES FOR CLAMPING DIE MEMBERS ONTO WEB PACKAGING MACHINES**

(30) Priority: 28.04.2016 US 201662328923 P; 26.04.2017 US 201715498088
(71) Applicant: Alkar-RapidPak, Inc., Lodi, WI 53555 (US)
(72) Inventor: Bonneville, Craig R., Black Earth, WI Wisconsin 53515 (US)
(74) Representative: Håmsø Patentbyrå AS

(57) **Abstract**

A web packaging machine for forming a food product package from a lower web of packaging material and an upper web of packaging material includes a frame, a die member supported by the frame and configured to form or close the food product package, and a clamping device comprising a first end that is pivotally coupled to the frame and an opposite, second end that is configured to secure the die member to the frame. The clamping device is pivotable into and between a locked position in which the clamping device clamps the die member to the frame and an unlocked position in which the clamping device is pivoted away from the die member such that the die member can be moved relative to the frame.

## Description

### CROSS-REFERENCE TO RELATED APPLICATION

The present application is based on and claims priority to U.S. Provisional Patent Application Serial No. 62/328,923 filed April 28, 2016, the disclosure of which is incorporated herein by reference.

### FIELD

The present disclosure relates to clamping devices for web packaging machines, specifically clamping devices for clamping and securing die members onto web packaging machines.

### BACKGROUND

The following U.S. Patents are incorporated herein by reference in entirety.

U.S. Patent No. 5,205,110 discloses an indexing motion apparatus and method for vacuum packaging of articles such as hot dogs, sliced luncheon meat, cheese or pharmaceuticals. A lower web of packaging material is indexingly advanced by a lower web drive driven in an indexing manner by a servo motor. Forming tooling is provided for vacuum forming the lower web to form one or more product cavities, and the forming tooling is movable between raised and lowered positions by a lifting and lowering system driven by a servo motor. A plug assist mechanism is provided for assisting the web to conform to the forming cavities. The plug assist mechanism is also movable in response to operation of servo motors, which actuate a pair of linear actuators. After the formed product cavities are loaded with product, the cavities are evacuated and an upper web applied to vacuum package the product.

U.S. Patent No. 7,490,448 discloses a form-fill-seal web packaging system that includes a pressure monitor at the sealing station to monitor a sealing pressure. A bladderless actuator effects relative movement of dies and applies the sealing pressure.

U.S. Patent No. 8,499,536 discloses packaging machines that include a web transport conveyor transporting a web of flexible packaging material from upstream to downstream locations through a series of stations.

### SUMMARY

This Summary is provided to introduce a selection of concepts that are further described below in the Detailed Description. This Summary is not intended to identify key or essential features of the claimed subject matter, nor is it intended to be used as an aid in limiting the scope of the claimed subject matter.

In certain examples, a web packaging machine for forming a food product package from a lower web of packaging material and an upper web of packaging material includes a frame, a die member supported by the frame and configured to form or close the food product package, and a clamping device comprising a first end that is pivotally coupled to the frame and an opposite, second end that is configured to secure the die member to the frame. The clamping device is pivotable into and between a locked position in which the clamping device clamps the die member to the frame and an unlocked position in which the clamping device is pivoted away from the die member such that the die member can be moved relative to the frame.

In certain examples, a web packaging machine for forming a food product package from a lower web of packaging material and an upper web of packaging material includes a frame, die member supported by the frame and configured to form or close the food product package, a first clamping device comprising a first end pivotally coupled to the frame and an opposite, second end configured to secure the die member to the frame, a second clamping device comprising a first end pivotally coupled to the frame and an opposite, second end configured to clamp the die member to the frame. The first clamping device is pivotable into and between a locked position in which the first clamping device clamps the die member to the frame and an unlocked position in which the first clamping device is pivoted away from the die member, and the second clamping device is pivotable into and between a locked position in which the second clamping device clamps the die member to the frame and an unlocked position in which the first clamping device is pivoted away from the die member. A pivot rod is coupled to and extends between the first and second clamping devices such that the first and second clamping devices simultaneously pivot into and between the locked positions and the unlocked positions.

In certain examples, a web packaging machine for forming a food product package from a lower web of packaging material and an upper web of packaging material includes a frame that defines a cutout and a die member supported by the frame and configured to form or close the food product package. The die member has a slot that is aligned with the cutout of the frame. The web packaging machine includes a clamping device that has a first end pivotally coupled to the frame and an opposite, second end that is configured to secure the die member to the frame. The clamping device is pivotable into and between a locked position in which the clamping device is received in the slot and clamps the die member to the frame and an unlocked position in which the clamping device is pivoted away from the die member such that the die member can be moved relative to the frame. The clamping device moves in the cutout as the clamping device is pivoted.

Various other features, objects, and advantages will be made apparent from the following description taken together with the drawings.

### BRIEF DESCRIPTION OF THE DRAWINGS

The present disclosure is described with reference to the following Figures. The same numbers are used throughout the Figures to reference like features and like components.
FIG. 1 is an example web packaging machine.
FIG. 2 is an enlarged view of a closing station along the web packaging machine of FIG. 1.
FIG. 3 is an exploded view of an example die member, example clamping devices, and a section of a frame that supports the die member.
FIG. 4 is an enlarged view of an example clamping device within line 4-4 on FIG. 2 and the clamping device is in an unlocked position.
FIG. 5 is a cross sectional view along line 5-5 of FIG. 4 showing the clamping device in the unlocked position (dashed lines) and a locked position (solid lines).
FIG. 6 is an enlarged view of the closing station of FIG. 2 within line 6-6 on FIG. 2 with the clamping devices in the locked position and the die member in a lowered position.
FIG. 7 is a view like FIG. 6 with the clamping devices in an unlocked position and the die member in the lowered position.
FIG. 8 is a view like FIG. 6 with the clamping devices in the unlocked position and a die member in a raised position.

### DETAILED DESCRIPTION OF THE DRAWINGS

In the present description, certain terms have been used for brevity, clarity and understanding. No unnecessary limitations are to be inferred therefrom beyond the requirement of the prior art because such terms are used for descriptive purposes only and are intended to be broadly construed. The different apparatuses described herein may be used alone or in combination with other apparatuses. Various equivalents, alternatives and modifications are possible within the scope of the appended claims.

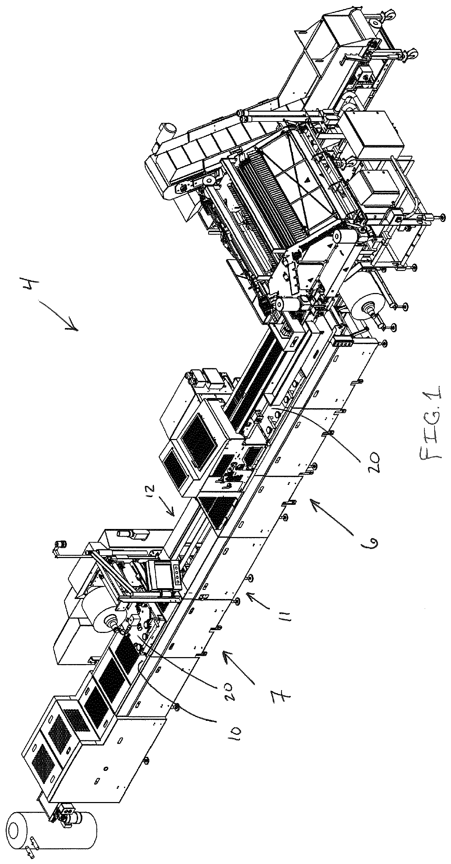

FIG. 1 depicts a web packaging machine 4 for forming a food product package from a lower web of packaging material and an upper web of packaging material. The web packaging machine 4 includes a web transport conveyor that is configured to transport lower web of packaging material and an upper web of packaging material through a series of stations that form the food product packages and close a food product in the food product packages. Reference is made the above incorporated U.S. Patents for further description of conventional web packaging machines and web transport conveyors. The web packaging machine 4 depicted in FIG. 1 includes a forming station 6 that forms the food products packages in the lower web of packaging material and/or the upper web of packaging material and a closing or sealing station 7 that closes or seals the food product package. The number and/or function of stations included with the web packaging machine 4 can vary.

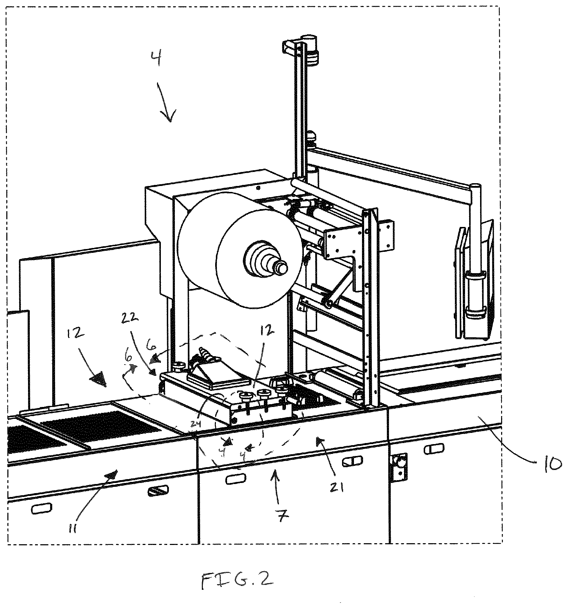

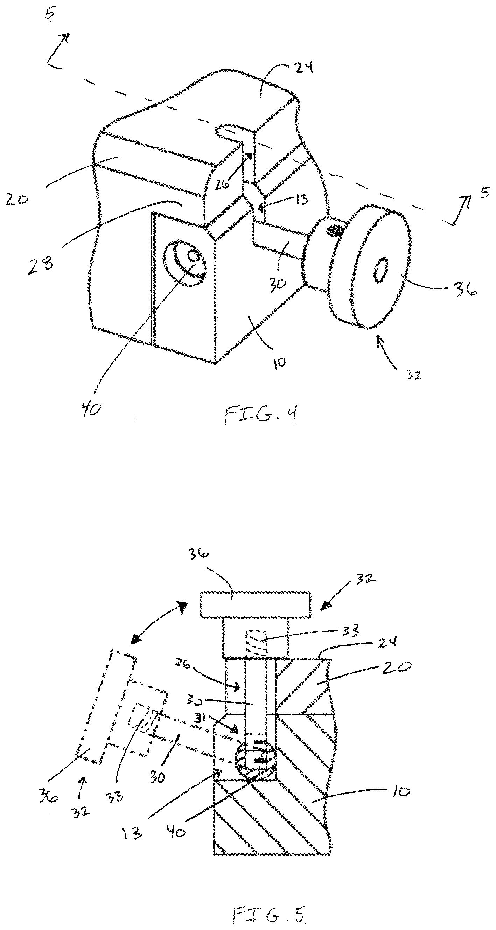

Referring to FIG. 2, the closing station 7 of the web packaging machine 4 is depicted. One having ordinary skill in the art will recognize that the components and features described herein with respect to the closing station 7 can be utilized at any of the stations included in the web packaging machine 4. The web packaging machine 4 has a frame 10 that support at least one die member 20 (described herein) positioned at the closing station 7. The frame 10 has a first side 11, an opposite, second side 12, and at least one cutout 13 (FIGS. 4-6) that is configured to receive a clamping device 30 (described herein, see FIGS. 4-6). The cutout(s) 13 can be located at the first side 11 and/or the second side 12 of the frame 10.

The die member 20 is configured to close/seal the food product packages at the closing station 7. In another example, the die member 20 is positioned at the forming station 6 (FIG. 1) and configured to form the food product packages. The die member 20 has a first side 21 positioned adjacent to the first side 11 of the frame 10 and an opposite, second side 22 that is positioned adjacent to the second side 12 of the frame 10. The die member 20 has a top surface 24 that the clamping device 30 clamps onto and at least one slot 26 (FIGS. 4-5) that is configured to receive a clamping device 30 and align with the cutout 13 of the frame 10. The clamping device 30 moves in the cutout 13 and the slot 26 as the clamping device 30 pivots into and between a locked position (see FIG. 5 in which the clamping device 30 depicted in solid lines is in the locked position) and the unlocked position (see FIG. 5 in which the clamping device 30 depicted in dashed lines is in the unlocked position).

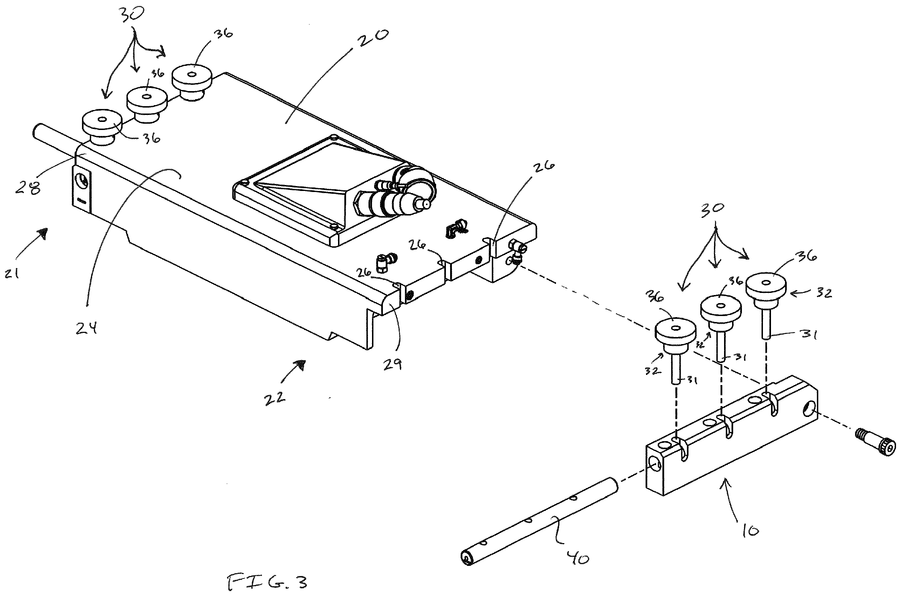

The die member 20 has a first flange 28 (FIG. 3) and an opposite, second flange 29 (FIG. 3) that extend from the first side 21 of the die member 20 and the second side 22 of the die member 20, respectively. In this example, the slots 26 defined in the flanges 28, 29 are aligned with the cutouts 13 of the frame 10 (FIGS. 4-5). The number, size, shape, and function of the die member 20 can vary.

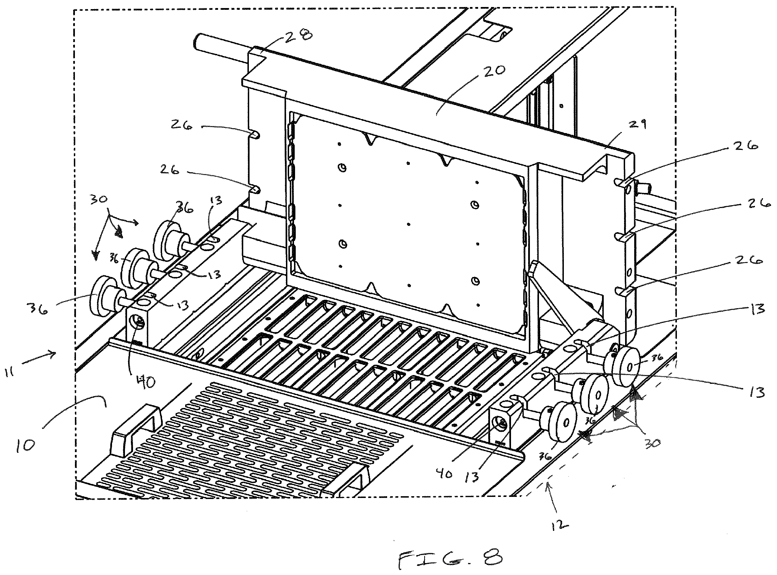

Referring to FIGS. 3-5, the web packaging machine 4 includes at least one clamping device 30 comprising a first end 31 that is pivotally coupled to the frame 10 and a second end 32 that is opposite the first end 31. The clamping device 30 is configured to secure or clamp the die member 20 to the frame 10, and the clamping device 30 is pivotable into and between a locked position (see FIG. 5 the clamping device 30 depicted in solid lines) in which the clamping device 30 clamps the die member 20 to the frame 10 and an unlocked position (see FIG. 5 the clamping device 30 depicted in dashed lines) in which the clamping device 30 is pivoted away from the die member 20 such that the die member 20 can be moved relative to the frame 10 (FIG. 8).

The clamping device 30 includes a tightening mechanism 36 at the second end 32 of the clamping device 30 that tightens the die member 20 onto the frame 10. In certain examples, the tightening mechanism 36 is a threaded handle that is configured to engage with screw threads 33 (FIG. 5) of the second end 32 of the clamping device 30 to thereby tighten the die member 20 onto the frame 10.

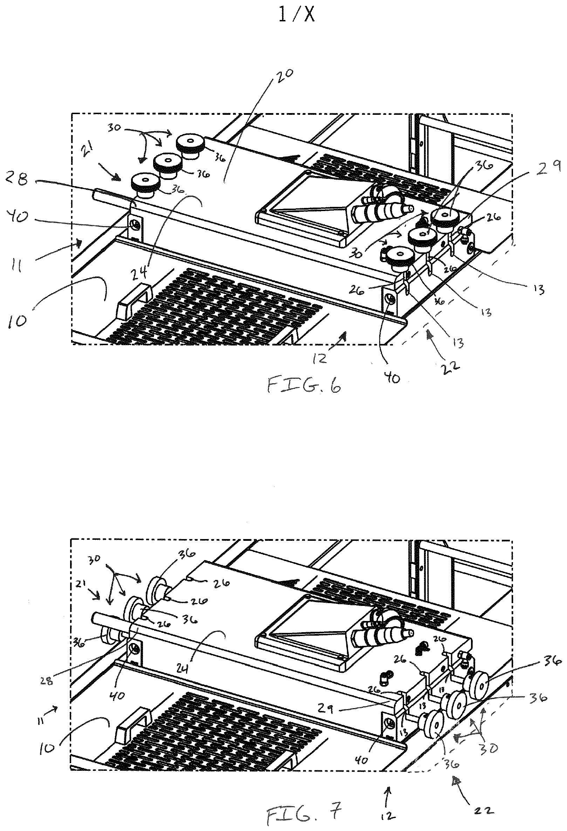

The web packaging machine 4 can include any number of clamping devices 30. In the example depicted in FIGS. 6-8, three clamping devices 30 are included at each side 21, 22 of the die member 20. One having ordinary skill in the art will recognize that the positioning, orientation, and/or number of the clamping devices 30 can vary. Referring back to FIGS. 3-5, web packaging machine 4 can included a pivot rod 40 coupled to and extending between the plurality of clamping devices 30 such that the plurality of clamping devices 30 simultaneously pivot into and between the locked position (FIG. 6) and the unlocked position (FIG. 7). The pivot rod 40 can be positioned at the first side 11 of the frame 10 and/or the second side 12 of the frame 10 (FIGS. 1-2) (i.e. a first pivot rod 40 couples to and extends between the clamping devices 30 that are pivotally coupled to the first side 11 of the frame 10 and a second pivot rod 40 couples to and extends between the clamping devices 30 that are pivotally coupled to the second side 12 of the frame 10). In certain examples, the first ends 31 of the clamping device 30 are coupled to the pivot rod 40 such that the clamping devices 30 pivot about the pivot rod 40.

Referring to FIGS. 6-8, an example operational sequence for clamping devices 30 is depicted. FIG. 6 depicts the die member 20 in a lowered position and the clamping devices 30 in locked positions such that the clamping devices 30 clamp the die member 20 to the frame 10. FIG. 7 depicts the die member 20 in the lowered position and the clamping devices 30 in unlocked positions such that the clamping devices 30 are pivoted away from the die member 20. The clamping devices 30 can be moved into and between the locked position (FIG. 6) and the unlocked position (FIG. 7) by loosening the tightening mechanism 36 and/or applying a force in a direction away from the die member 20 to second ends 32 (FIGS. 3-5) of the clamping devices 30. After the clamping devices 30 have been moved to the unlocked position (FIG. 7) the die member 20 can be moved relative to the frame 10, e.g. to a raised position (FIG. 8), for cleaning, maintenance, repair, and/or replacement.

The present inventors have recognized the need for web packaging machines that allow a user to easily clean, maintain, repair, and replace heavy die members, and components thereof, at the various stations included on the web packaging machine. In particular, a heat sealing component (e.g. heat seal bar) of a closing or sealing station may accumulate residual amounts of adhesives and plastic compounds that build up as the web packaging machine is operated. Accordingly, these components must be regularly cleaned in order to ensure proper closing or sealing of the food product packages. Furthermore, scheduled cleaning of die members, and components thereof, must be performed to avoid equipment failures which could require expensive repairs. As such that present inventors have developed the web packaging machines and the clamping devices described herein which allow an operator to quickly and efficiently clamp the die members to the frame and unclamp the die members from the frame for cleaning, maintenance, repair, and/or replacement.

## Claims

1. A web packaging machine for forming a food product package from a lower web of packaging material and an upper web of packaging material that are transported by a web transport conveyor, the web packaging machine comprising:
a frame;
a die member supported by the frame and configured to form or close the food product package; and
a clamping device comprising a first end that is pivotally coupled to the frame and an opposite, second end that is configured to secure the die member to the frame, wherein the clamping device is pivotable into and between a locked position in which the clamping device clamps the die member to the frame and an unlocked position in which the clamping device is pivoted away from the die member such that the die member can be moved relative to the frame.

2. The web packaging machine according to claim 1, wherein the die member has a top surface and wherein the clamping device clamps onto the top surface in the locked position.

3. The web packaging machine according to claim 1 or 2, wherein the second end of the clamping device has a tightening mechanism that tightens the die member onto the frame.

4. The web packaging machine according to claim 3, wherein the second end comprises screw threads and wherein the tightening mechanism is a threaded handle that is configured to engage with the screw threads of the second end to thereby tighten the die member onto the frame.

5. The web packaging machine according to any preceding claim, wherein the die member has a slot configured to receive the clamping device when the clamping device is moved into the locked position.

6. The web packaging machine according to claim 5, wherein the die member has a flange in which the slot is defined.

7. The web packaging machine according to claim 5 or 6, wherein the frame defines a cutout that is aligned with the slot, wherein the clamping device moves in the cutout and the slot as the clamping device is pivoted.

8. The web packaging machine according to any preceding claim, wherein the clamping device is one of a plurality of clamping devices, and further comprising a pivot rod coupled to and extending between the plurality of clamping devices such that the plurality of clamping devices simultaneously pivot into and between the locked position and the unlocked position.

9. The web packaging machine according to claim 8, wherein each clamping device of the plurality of clamping devices has a first end coupled to the pivot rod, and wherein the plurality of clamping devices pivot about the pivot rod.

10. A web packaging machine for forming a food product package from a lower web of packaging material and an upper web of packaging material that are transported by a web transport conveyor, the web packaging machine comprising:
a frame;
a die member supported by the frame and configured to form or close the food product package;
a first clamping device comprising a first end pivotally coupled to the frame and an opposite, second end configured to secure the die member to the frame, wherein the first clamping device is pivotable into and between a locked position in which the first clamping device clamps the die member to the frame and an unlocked position in which the first clamping device is pivoted away from the die member;
a second clamping device comprising a first end pivotally coupled to the frame and an opposite, second end configured to clamp the die member to the frame, wherein the second clamping device is pivotable into and between a locked position in which the second clamping device clamps the die member to the frame and an unlocked position in which the first clamping device is pivoted away from the die member; and
a pivot rod coupled to and extending between the first and second clamping devices such that the first and second clamping devices simultaneously pivot into and between the locked positions and the unlocked positions.

11. The packaging machine according to claim 10, wherein the die member has a top surface; and wherein the first clamping device and the second clamping device clamp onto the top surface when the first and second clamping devices are each in the locked position.

12. The packaging machine according to claim 10 or 11, wherein the second ends of the clamping devices each have a tightening mechanism configured to tighten the die member onto the frame.

13. The packaging machine according to claim 12, wherein the second ends comprise screw threads and wherein the tightening mechanisms are threaded handles each configured to engage with the screw threads of the second ends to thereby tighten the die member onto the frame.

14. The packaging machine according to any of claims 10 to 13, wherein the die member has a first slot configured to receive the first clamping device when the first clamping device is in the locked position and a second slot configured to receive the second clamping device when the second clamping device is in the locked position.

15. The packaging machine according to claim 14, wherein the die member has a flange in which the first slot and the second slot are defined.

16. The packaging machine according to claim 14 or 15, wherein the frame defines a first cutout that is aligned with the first slot and a second cutout that is aligned with the second slot, wherein the first clamping device moves into the first cutout and the first slot as the first clamping device pivots, and wherein the second clamping device moves in the second cutout and the second slot as the second clamping device pivots.

17. A web packaging machine for forming a food product package from a lower web of packaging material and an upper web of packaging material that are transported by a web transport conveyor, the web packaging machine comprising:
a frame that defines a cutout;
a die member supported by the frame and configured to form or close the food product package, the die member having a slot that is aligned with the cutout; and
a clamping device comprising a first end that is pivotally coupled to the frame and an opposite, second end that is configured to secure the die member to the frame, wherein the clamping device is pivotable into and between a locked position in which the clamping device is received in the slot and clamps the die member to the frame and an unlocked position in which the clamping device is pivoted away from the die member such that the die member can be moved relative to the frame, and wherein the clamping device moves in the cutout as the clamping device is pivoted.

18. The packaging machine according to claim 17, wherein the die member has a flange in which the slot is defined.

19. The packaging machine according to claim 17 or 18, wherein the die member has a top surface and wherein the clamping device clamps onto the top surface in the locked position.

20. The packaging according to any of claims 17 to 19, wherein the clamping device is one of a plurality of clamping devices, and further comprising a pivot rod coupled to and extending between the plurality of clamping devices such that the plurality of clamping devices simultaneously pivot into and between the locked positions and the unlocked positions.
